# EUROPEAN PATENT APPLICATION

(11) **EP 4 451 552 A1**
(43) Date of publication of application: **23.10.2024**
(21) Application number: 23382358.2
(22) Date of filing: 18.04.2023
(51) Int. Cl.: H02S 20/00, F24S 25/636, H02S 30/10

(54) **FIXING DEVICE FOR PHOTOVOLTAIC PANELS FOR FLOATING OR LAND-BASED INSTALLATIONS**

(71) Applicant: Isigenere, S.L., 03460 Beneixama (ES)
(72) Inventor: PONS PUIG, Emilio, Beneixama (ES); REDÓN SANTAFÉ, Miguel, Godella (ES); DEL VECCHIO, Miguel Ángel, Beneixama (ES); GÓMEZ GONZALEZ, Antonio, Beneixama (ES)
(74) Representative: Elzaburu S.L.P.

(57) **Abstract**

Fixing device (1, 1') for photovoltaic panels for floating or land-based installations, having an open end (2) with a space configured to at least partially house the frame (3) of a photovoltaic panel, wherein the space is C-shaped delimited by three walls (4, 4', 4") of the device, at least one of said walls (4, 4', 4") being provided with ribs (5) on the face oriented towards said space.

## Description

### Field of the invention

The present invention relates to a fixing device for photovoltaic panels which can be applied in its various embodiments both for fixing photovoltaic panels on floating installations and on land-based installations.

### Background of the invention

Numerous systems and installations for photovoltaic panels with a base structure supporting the photovoltaic panels exist in the prior art.

These systems contain fixing devices for photovoltaic panels, sometimes referred to as clamps. An example of land-based photovoltaic installations (on ground or flat roofs) that include such devices is described in WO2010097406A2.

There are also floating systems and installations for photovoltaic panels with fixing devices for photovoltaic panels, such as those described in documents EP2549551B1 or WO2010064105A2. On top of these systems, one or more photovoltaic panels are supported on a metal or plastic auxiliary structure.

The disadvantage of these systems is that, in order to achieve a stable and rigid fastening of the photovoltaic panels, fastening systems with many components are necessary, which increases the time and difficulty of assembly, and therefore reduces the performance of the work.

### Summary of the invention

The object of the present invention is therefore to provide a fixing device for photovoltaic panels for floating or land-based installations which is simple to configure and which makes it possible to overcome the disadvantages of the prior art.

The invention provides a fixing device for photovoltaic panels for floating or land-based installations, which has an open end with a space configured to at least partially house the frame of a photovoltaic panel, wherein the space is C-shaped delimited by three walls of the device, at least one of said walls being provided with ribs on the face oriented towards said space.

This configuration allows the photovoltaic panels to be held rigidly in place with a simple device. In particular, in floating installations, a very suitable solution is achieved that allows for dealing with adverse wind and wave conditions.

Further advantageous embodiments of the invention are set out in the dependent claims.

### Brief description of the drawings

In the following, the subject matter of the present invention will be illustrated in a nonlimiting manner by reference to the accompanying drawings, wherein:
Figure 1 shows a perspective view of a first embodiment of a fixing device for photovoltaic panels for floating or land-based installations of the invention.
Figure 2 shows another perspective view of the device of figure 1.
Figure 3 shows a side view of the device of figure 1.
Figure 4 shows a perspective view of the device of figure 1 coupled to a photovoltaic panel.
Figure 5 shows the components of a second embodiment of an attachment device for photovoltaic panels for floating or ground-based installations of the invention, viewed in perspective.
Figure 6 shows the components of figure 5, as seen from the side.
Figure 7 shows a side view of the device of figure 5 attached to a photovoltaic panel.
Figures 8, 9 and 10 show different views of the first component of the device of figure 5.
Figures 11, 12 and 13 show different views of the second component of the device of figure 5.
Figures 14 and 15 show different views of the third component of the device of figure 5.

### Detailed description of the invention

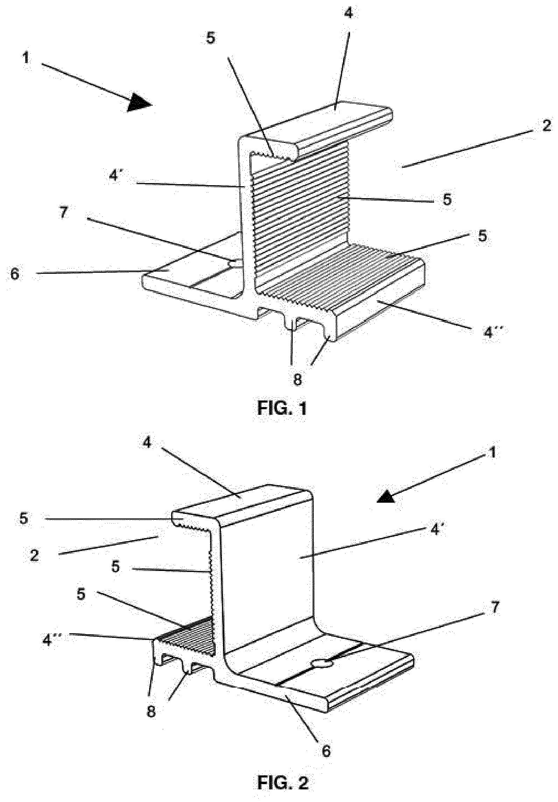

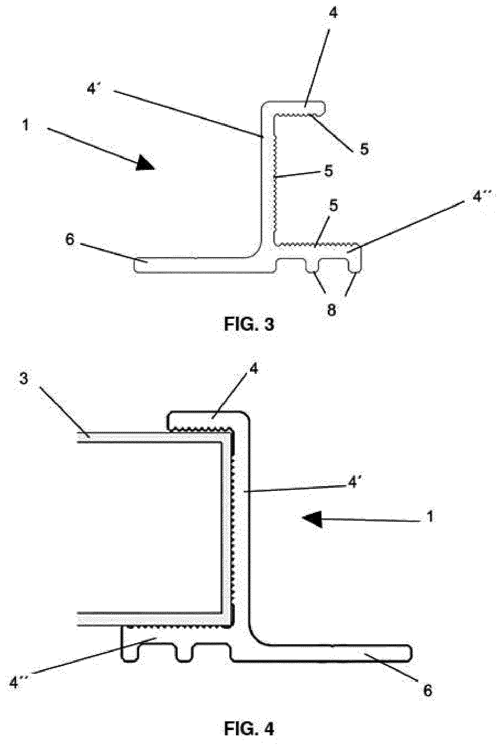

Figures 1 and 2 show a perspective view of a first embodiment of a fixing device 1 for photovoltaic panels for floating or land-based installations of the invention. The embodiment shown in Figures 1 and 2 has an open end 2 with a space configured to at least partially house the frame 3 of a photovoltaic panel (as shown in Figure 4). The space is C-shaped and delimited by three walls 4, 4', 4" of the device, at least one of said walls being provided with ribs 5 on the space-facing side of the open end 2. In the embodiment of figures 1 to 4, the three walls 4, 4', 4" delimiting the C-shaped open space form right angles and are provided with ribs 5 on the space-facing sides.

In these figures, the fixing device 1 for photovoltaic panels for floating or land-based installations additionally comprises an extension 6 in the form of a plate-shaped base opposite the C-shaped open space and with a through hole 7. The through hole 7 allows the device 1 to be attached to a support structure with standard screws or rivets.

Likewise, the wall 4" which is a continuation of the extension 6 as a base and which is one of those delimiting the C-shaped open space has a series of stiffeners 8 on the face opposite to that containing the ribs 5, in order to increase its robustness and prevent relative displacements between the support medium or structure and the fixing device 1 which is the subject of the present invention.

This configuration of the fixing device 1 of the first embodiment makes it possible to fix the frame 3 of the photovoltaic panel by having direct contact with three of its faces (the top, the bottom and the side). The device 1 adapts to the shape of the frame 3 of the photovoltaic panel, and the ribs 5 on the faces 4, 4', 4" delimiting the C-shaped space increase the friction with the corresponding surfaces of the frame 3 of the photovoltaic panel (which may also have ribs), thus blocking possible displacements of the photovoltaic panel.

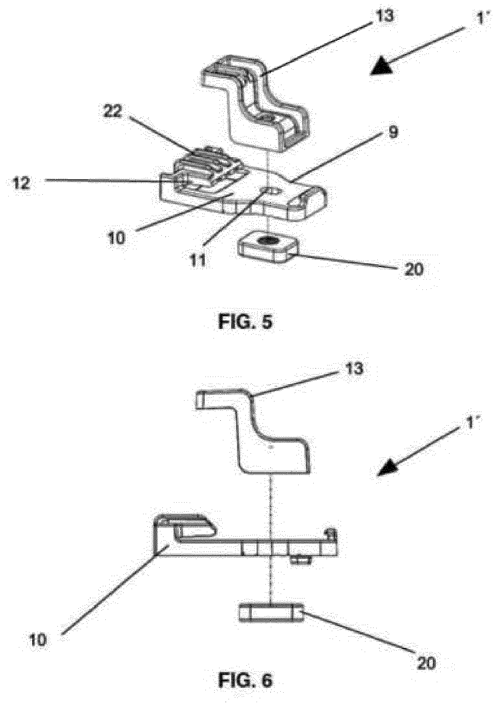

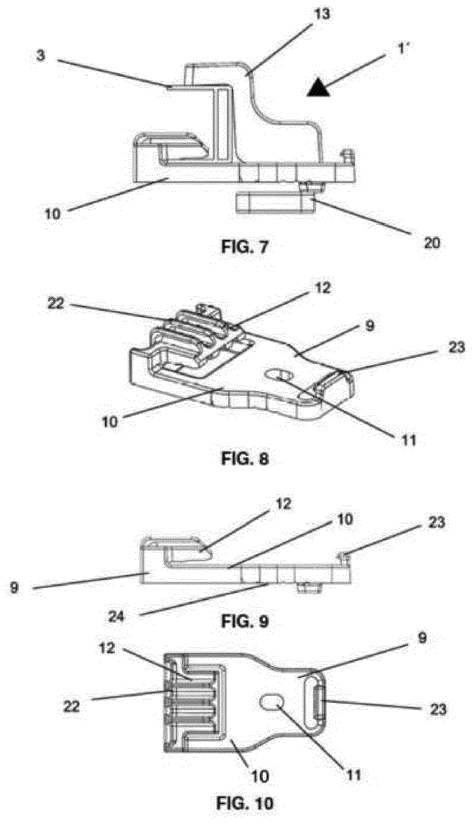

Figures 5, 6 and 7 show the components of a second embodiment of a fixing device 1' for photovoltaic panels of floating or land-based installations of the invention, the fixing device 1' in figure 7 being mounted and coupled to the frame 3 of a photovoltaic panel.

The fixing device 1' of Figures 5 to 7 comprises the following components configured to be assembled together:
- a base part 9, having a plate-shaped part 10 with a through hole 11 from which a first flange 12 protrudes at one end which is bent so as to be parallel to the plate-shaped part 10 and delimits a space between the first flange 12 and the plate-shaped part 10,
- a Z-shaped part 13, with an upper section 14, an intermediate section 15 and a lower section 16, with a through hole 19 on the lower section 16, ribs 5 on its upper section 14 and lateral ribs 18 on the sides of the entire Z-shaped part 13, and
- a plate 20 with a through hole 21.

In the assembled position of the device 1', the holes 11, 19, 21 drilled in the three components are coincident and allow the insertion of fixing means. These fixing means which pass through the through holes 11, 19, 21 of the base part 9, the Z-part 13 and the plate 20 can be either bolt and nut assemblies or rivets.

The base part 9 may additionally comprise a second flange 23, at the end opposite the first flange 12, which may be smaller in size than the first flange 12 and whose purpose may be to bring the base part 9 into its final position, after initial pre-assembly of the base part 9.

The base part 9 may additionally comprise ribs 22 on the first flange 12, to prevent it from flexing. The geometry of the base part 9, with the space between the first flange 12 and the plate-shaped part 10, allows the lower flange of the frame 3 of the photovoltaic panel to be attached from the inside.

The base part 9 may additionally comprise ribs 24 on its underside, which serve as a guide for mounting in slotted areas and prevent rotation of the base part 9.

The Z-shaped part 13 has ribs 5 on its upper section 14 and lateral ribs 18 on the sides of the entire Z-shaped part 13, which increase its rigidity and prevent the deformations that would be caused by the release of the photovoltaic panel.

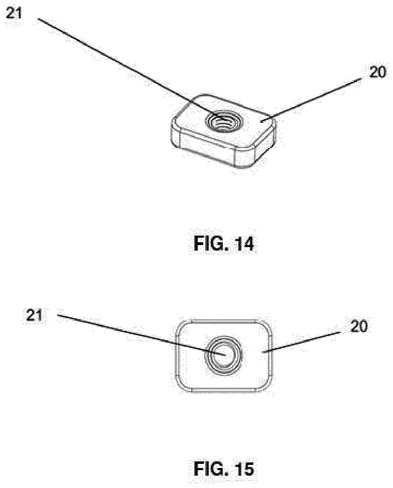

The plate 20 in figures 14 and 15 has a hole 21 that can be threaded, which can be used with universal screws and allows the three components to be attached to a support structure. This plate 20 can be rectangular in shape, which allows it to be fitted on guides of the support structure, thus restricting its rotation.

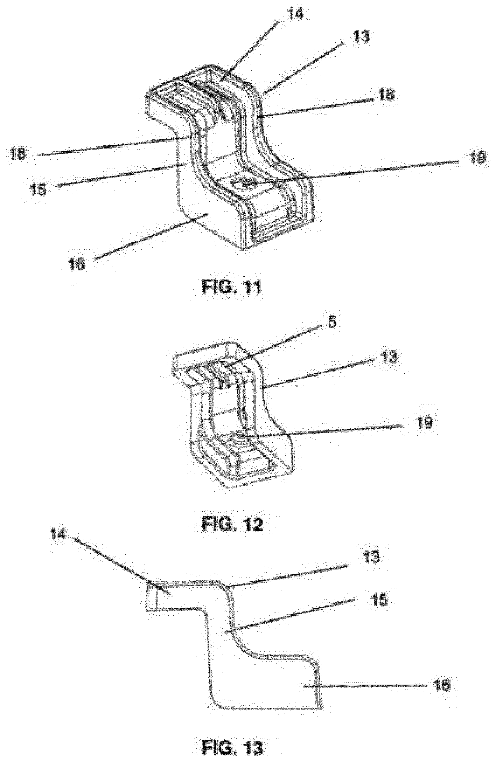

This embodiment of Figures 5 to 15 allows the frame 3 of the photovoltaic panel to be fixed from its upper and lower surfaces and, in addition, from an inner flange of the frame 3, which makes it more suitable for installations subjected to high loads, by having a double fixing of the frame 3 of the photovoltaic panel.

The fastening devices 1, 1' of the invention can be manufactured either by metal extrusion (e.g. extruded aluminium) or by thermoplastic injection moulding.

Although some embodiments of the invention have been described and illustrated, it is clear that modifications within the scope of the invention may be made thereto, and the scope of the invention is not to be considered as limited to these embodiments, but only to the content of the following claims.

## Claims

1. Fixing device (1, 1') for photovoltaic panels for floating or land-based installations, having an open end (2) with a space configured to house at least partially the frame (3) of a photovoltaic panel, **characterised in that** the space is C-shaped and delimited by three walls (4, 4', 4") of the device, at least one of said walls (4, 4', 4") being provided with ribs (5) on the face oriented towards said space.

2. Fixing device (1, 1') for photovoltaic panels for floating or land-based installations, according to claim 1, wherein the three walls (4, 4', 4") delimiting the open end (2) in the shape of a C form right angles and are provided with ribs (5) on the faces oriented towards said open end (2).

3. Fixing device (1, 1') for photovoltaic panels for floating or land-based installations, according to claim 2, which additionally comprises an extension (6) as a base in the form of a plate opposite the open end (2) in the shape of a C and with a through hole (7).

4. Fixing device (1, 1') for photovoltaic panels for floating or land-based installations, according to claim 2 or 3, comprising a series of stiffeners (8) on one of the walls delimiting the C-shaped open end (2) and which is a continuation of the extension (6) as a base, on its opposite face to the one containing the ribs (5).

5. Fixing device (1, 1') for photovoltaic panels for floating or land-based installations, according to claim 1, comprising the following components configured to be assembled together:
- a base part (9), having a plate-shaped part (10) with a through hole (11) from which a first flange (12) protrudes at one end which is bent so that it is parallel to the plate-shaped part (10) and delimits a space between the first flange (12) and the plate-shaped part (10),
- a Z-shaped part (13), with an upper section (14), an intermediate section (15) and a lower section (16), with a through hole (19) on the lower section (16), ribs (5) on its upper section (14) and lateral ribs (18) on the sides of the whole Z-shaped part (13), and
- a plate (20) with a through hole (21),
in such a way that in the assembled position of the device, the through holes (11, 19, 21) in the three components coincide and allow the insertion of fixing means.

6. Fixing device (1, 1') for photovoltaic panels for floating or land-based installations, according to claim 5, wherein the base part (9) additionally comprises ribs (22) on the first flange (12).

7. Fixing device (1, 1') for photovoltaic panels for floating or land-based installations, according to claim 5 or 6, wherein the base part (9) additionally comprises a second flange (23) at the end opposite to the first flange (12).

8. Fixing device (1, 1') for photovoltaic panels for floating or land-based installations, according to claim 5, 6 or 7, wherein the base part (9) additionally comprises ribs (24) on its lower face.

9. Fixing device (1, 1') for photovoltaic panels for floating or land-based installations, according to any of claims 5 to 8, wherein the fixing means that pass through the through holes (11, 19, 21) of the base part (9), the Z-part (13) and the plate (20) are screw and nut assemblies.

10. Fixing device (1, 1') for photovoltaic panels for floating or land-based installations, according to any of claims 5 to 8, wherein the fixing means that pass through the through holes (11, 19, 21) of the base part (9), the Z-part (13) and the plate (20) are rivets.

11. Fixing device (1, 1') for photovoltaic panels for floating or land-based installations, according to any of claims 5 to 10, wherein the plate (20) is rectangular in shape.

12. Fixing device (1, 1') for photovoltaic panels for floating or land-based installations, according to any of claims 1 to 11, wherein the device is made of metal manufactured by extrusion.

13. Fixing device (1, 1') for photovoltaic panels for floating or land-based installations according to claim 12, wherein the device is made of extruded aluminium.

14. Fixing device (1, 1') for photovoltaic panels for floating or land-based installations according to any one of claims 1 to 11, wherein the device is made of thermoplastic material manufactured by injection moulding.
